(19) Europäisches Patentamt
European Patent Office
Office européen des brevets

(11) **EP 2 515 449 A1**

(12) **EUROPEAN PATENT APPLICATION**
published in accordance with Art. 153(4) EPC

(43) Date of publication:
**24.10.2012 Bulletin 2012/43**

(51) Int Cl.:
***H04B 7/04*** (2006.01)

(21) Application number: **09852190.9**

(22) Date of filing: **18.12.2009**

(86) International application number:
**PCT/CN2009/075690**

(87) International publication number:
**WO 2011/072452 (23.06.2011 Gazette 2011/25)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
• **WANG, Jian**
**Beijing 100025 (CN)**
• **WU, Jianming**
**Beijing 100025 (CN)**
• **ZHOU, Hua**
**Beijing 100025 (CN)**

(74) Representative: **Stebbing, Timothy Charles**
**Haseltine Lake LLP**
**Lincoln House, 5th Floor**
**300 High Holborn**
**London WC1V 7JH (GB)**

(54) **METHOD AND DEVICE FOR LAYER MAPPING AND METHOD AND DEVICE FOR GENERATING LAYER MAPPING PATTERNS**

(57) The invention relates to a method and a device for mapping code words to layers in a Multi-Input Multi-Output (MIMO) system, and a method and a device for generating layer mapping patterns. The mapping method includes a mapping step, wherein each code word of multiple code words is mapped by mapping different code words of the multiple code words to different layer pairs of L layers on each symbol of multiple symbols, and each layer pair is composed of two layers of the L layers, wherein L=2M and M is an integer that is larger than 1; and in the method, each code word is circularly mapped on the multiple symbols to all layer pairs that can be generated by the L layers. According to the method for mapping code words to layers in the invention, the diversity performance can be improved through mapping each code word circularly on the multiple symbols to all layer pairs that can be generated by the multiple layers, thus the decoding performance is improved.

```
                    START
                      │
ST302                 ▼
      ┌─────────────────────────────────────┐
      │ MAPPING THE FIRST CODEWORD TO TWO    │
      │ LAYERS OF FOUR LAYERS                │
      └─────────────────────────────────────┘
ST304                 │
                      ▼
      ┌─────────────────────────────────────┐
      │ MAPPING THE SECOND CODEWORD TO THE   │
      │ REST TWO LAYERS OF THE FOUR LAYERS   │
      └─────────────────────────────────────┘
                      │
                      ▼
                     END
```

FIG.3

EP 2 515 449 A1

**Description**

Field of the Invention

The present invention relates to a method of and a device for mapping codeword to layer in a Multi-Input Multi-Output (MIMO) system, and a method and a device for generating a layer mapping pattern.

Background of the Related Art

The MIMO system is a wireless communication system that makes use of plural transmitting antennas and plural receiving antennas for data transmission. Since the MIMO system supports parallel transmissions of data streams, and is capable of providing high data rate, great throughput and larger communication distance, it has become one of key technologies to which attention has been increasingly paid by people in professional researches and actual applications alike. Through the sustained development over the recent years, the MIMO technology is more and more applied in various wireless communication systems. With respect to the wireless wideband mobile communications system, the 3$^{rd}$ Generation Partner Project (3GPP) for Mobile Communications has incorporated in its standards the contents relevant to the MIMO technology. At the same time, the MIMO technology has also become the hot technology of the 4$^{th}$ Generation (4G) Communication, and has been a key part in almost all new radio standards, such as HSDPA, 802.11 n, 802.16e, 802.10 and 802.20, etc..

Under general circumstances, forward error correction encoding is first performed on each of parallel data streams in multi-antenna transmission, and the encoded codewords are then mapped to one or more transmission layers. When the codewords are mapped to plural transmission layers, the serial data output from the encoder are serial-to-parallel converted to corresponding multiple layers. The number of all layers supportable by the system in one transmission is also referred to as the rank of this transmission.

The MIMO technology makes use of plural transmitting (Tx) antennas and plural receiving (Rx) antennas to enhance the transmission/reception efficiency of data, for instance, to enhance data transmission rate under some given channel states (such as spatial multiplexing), or to enhance system performance under specific data transmission rate (such as spatial diversity).

Channel fading is a main factor causing deterioration of wireless communication system performance. Channel gain values vary with variations in time, frequency and space. The lower a channel gain value is, the more deteriorated the performance will be. The representative method that addresses the aforementioned fading problem is to use diversity technology, which is based on the fact that it is highly improbable for all independent channels to simultaneously have low gain values.

In the MIMO system, different channel gain values of different antennas are used during spatial diversity. This is referred to as layer permutation or layer mapping transform. It has been determined in the LTE-Advanced system that at most 2 codewords and 4 layers (namely 4 virtual antennas) are used in uplink transmission.

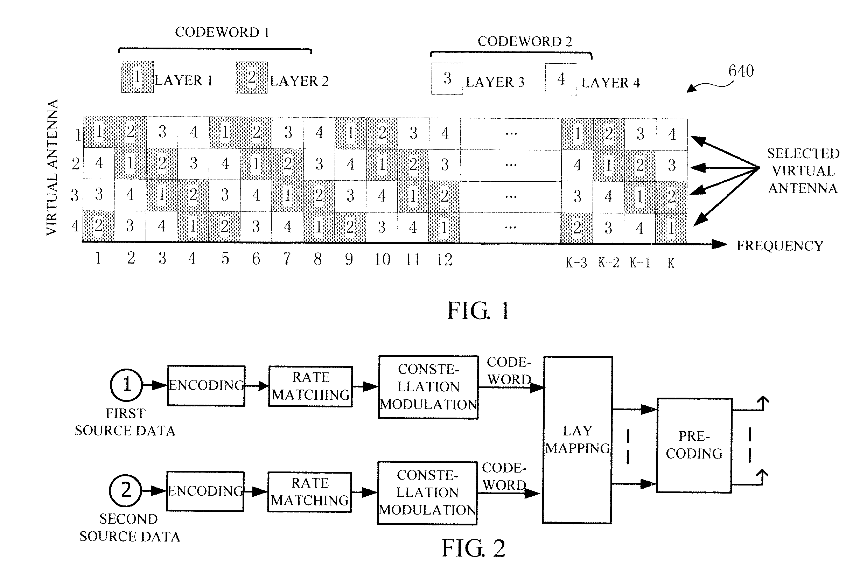

In Chinese patent application publication CN101536358A are disclosed some cyclic layer mapping patterns. Fig. 1 illustrates transmission using symmetric layer permutation when two codewords correspond to rank of 4, in which four virtual antennas are selected and used, and four layers are usable and can be mapped to the four selected virtual antennas under layer permutation. As shown in Fig. 1, codeword 1 is mapped to layer 1 and layer 2, as shown by shadows in Fig. 1; codeword 2 is mapped to layer 3 and layer 4, as shown without shadow in Fig. 1. Although each layer is cyclically mapped to all four virtual antennas such that the data of each codeword can be transmitted via all the antennas, each codeword nonetheless merely covers a portion of all antenna pairs, i.e., {1, 4}, {2, 1}, {3, 2}, {4, 3}, and does not cover all antenna pairs. Insofar as four virtual antennas are concerned, six antenna pairs {1, 2}, {1, 31, {1, 4}, {2, 3}, {2, 4}, {3, 4} can be formed without considering the order of each antenna in the antenna pairs. However, once the order of each antenna in the antenna pairs is taken into consideration, twelve ordered antenna pairs can be formed as {1, 2}, {2, 1}, {1, 3}, {3, 1}, {1, 4}, {4, 1}, {2, 3}, {3, 2}, {2, 4}, {4, 2}, {3, 4}, {4, 3}. Thus, according to the cyclic layer mapping patterns disclosed in Chinese patent application publication CN101536358A, diversity performance is not sufficiently made use of, thereby leading to deteriorated decoding performance.

Accordingly, there is a need for a method for layer mapping and a method for generating a corresponding layer mapping pattern in the MIMO system, and for corresponding devices thereof, which are capable of making each codeword cover all antenna pairs (namely layer pairs).

Summary of the Invention

The present invention aims to provide a method of and a device for mapping codeword to layer, and a method and a device for generating a corresponding layer mapping pattern, in which each codeword is capable of covering all antenna pairs on a plurality of symbols.

To achieve the above objectives and other additional objectives, the present application provides the following aspects.

According to one aspect of the present invention, there is provided a method of mapping codeword to layer in a Multi-Input Multi-Output system, comprising mapping each of multiple codewords by mapping, on each symbol of a plurality of symbols, different codewords of the multiple codewords to different layer pairs each consisting of two layers of L layers, wherein L=2M, and M is an integer larger than 1, wherein each codeword is mapped cyclically across all layer pairs, which can be constituted by the L layers, on the plurality of symbols.

According to another aspect of the present invention, there is provided a device for mapping codeword to layer in a Multi-Input Multi-Output system, comprising a mapping module for mapping each of multiple codewords by mapping, on each symbol of a plurality of symbols, different codewords of the multiple codewords to different layer pairs each consisting of two layers of L layers, wherein L=2M, and M is an integer larger than 1, wherein each codeword is mapped cyclically across all layer pairs, which can be constituted by the L layers, on the plurality of symbols.

According to still another aspect of the present invention, there is provided a method for generating a layer mapping pattern used for a Multi-Input Multi-Output system, comprising determining all layer permutations formed of L layers used in the Multi-Input Multi-Output system when a first layer of the L layers is fixed in a first order and orders of (L-1) layers of the L layers except the first layer are changed, wherein the number of the all layer permutations is $N = P_{L-1}^{L-1}$, wherein L=2M, and M is an integer larger than 1; generating one element pattern for each layer permutation of all the determined layer permutations by combining the layer permutation and (L-1) new layer permutations generated by cycle-shifting the layer permutation; selecting K element patterns from the generated N element patterns, wherein K is an integer larger than 1 and not larger than N; generating the layer mapping pattern based on the selected K element patterns, wherein, when each codeword of multiple codewords is mapped in the Multi-Input Multi-Output system by mapping, on each symbol of a plurality of symbols, different codewords of the multiple codewords to different layer pairs each consisting of two layers of the L layers according to the generated layer mapping pattern, each codeword is mapped cyclically across all layer pairs, which can be constituted by the L layers, on the plurality of symbols.

According to yet another aspect of the present invention, there is provided a device for generating a layer mapping pattern used for a Multi-Input Multi-Output system, comprising a layer permutation determination module for determining all layer permutations formed of L layers used in the Multi-Input Multi-Output system when a first layer of the L layers is fixed in a first order and orders of (L-1) layers of the L layers except the first layer are changed, wherein the number of the all layer permutations is $N = P_{L-1}^{L-1}$, wherein L=2M, and M is an integer larger than 1; an element pattern generation module for generating one element pattern for each layer permutation of all the determined layer permutations by combining the layer permutation and (L-1 new layer permutations generated by cycle-shifting the layer permutation; a selection module for selecting K element patterns from the generated N element patterns, wherein K is an integer larger than 1 and not larger than N; a layer mapping pattern generation module for generating the layer mapping pattern based on the selected K element patterns, wherein when each codeword of multiple codewords is mapped in the Multi-Input Multi-Output system by mapping, on each symbol of a plurality of symbols, different codewords of the multiple codewords to different layer pairs each consisting of two layers of the L layers according to the generated layer mapping pattern, each codeword is mapped cyclically across all layer pairs, which can be constituted by the L layers, on the plurality of symbols.

According to a further aspect of the present invention, there is provided a storage medium comprising machine-readable program code, wherein when the program code is executed on a Multi-Input Multi-Output system or an information processing system, the program code enables the Multi-Input Multi-Output system or the information processing system to execute the method of mapping codeword to layer in a Multi-Input Multi-Output system according to the present invention.

According to still a further aspect of the present invention, there is provided a program product comprising machine-executable instructions, wherein when the instructions are executed by a Multi-Input Multi-Output system or an information processing system, the instructions enable the Multi-Input Multi-Output system or the information processing system to execute the method of mapping codeword to layer in a Multi-Input Multi-Output system according to the present invention.

According to yet a further aspect of the present invention, there is provided a storage medium comprising machine-readable program code, wherein when the program code is executed on a Multi-Input Multi-Output system or an information processing system, the program code enables the Multi-Input Multi-Output system or the information processing system to execute the method for generating a layer mapping pattern used for a Multi-Input Multi-Output system according to the present invention.

According to yet further aspect of the present invention, there is provided a program product comprising machine-executable instructions, wherein when the instructions are executed by a Multi-Input Multi-Output system or an information processing system, the instructions enable the Multi-Input Multi-Output system or the information processing system to execute the method for generating a layer mapping pattern used for a Multi-Input Multi-Output system according to the present invention.

Considering from the decoding perspective, the more antenna pairs (or layer pairs) each codeword is capable of covering, the more excellent will be the diversity performance and the decoding performance. Accordingly, by virtue of the method of and device for mapping codeword to layer according to the present invention, the diversity performance can be enhanced and the decoding performance can therefore be enhanced by cyclically mapping each codeword to all layer pairs that can be constituted by a plurality of layers, on a plurality of symbols.

By virtue of the method and device for generating a layer mapping pattern used for a Multi-Input Multi-Output system according to the present invention, a layer mapping pattern, by which each codeword is cyclically mapped to all layer pairs that can be constituted by a plurality of layers on a plurality of symbols, is generated, and therefore the diversity performance during mapping codeword to layer can be enhanced and the decoding performance can therefore be enhanced.

These and other advantages of the present invention will become more apparent through the detailed explanations below of the most preferred embodiments of the present invention with reference to the accompanying drawings.

Drawings Accompanying the Description

The accompanying drawings illustrate preferred embodiments of the present invention, and constitute a part of the Description to enunciate the principles of the present invention together with the literal description. In which:

Fig. 1 illustrates a prior-art layer mapping pattern using symmetric layer permutation when two codewords correspond to four ranks;

Fig. 2 is a block diagram exemplarily illustrating an ordinary Multi-Input Multi-Output (MIMO) system;

Fig. 3 is a flowchart exemplarily illustrating the method of mapping two codewords to four layers according to the present invention;

Fig. 4 is a block diagram exemplarily illustrating the device for mapping two codewords to four layers;

Fig. 5 illustrates a first example of a layer mapping pattern according to the present invention;

Fig. 6 illustrates a second example of a layer mapping pattern according to the present invention;

Fig. 7 illustrates a third example of a layer mapping pattern according to the present invention;

Fig. 8 is a flowchart exemplarily illustrating the method for generating a layer mapping pattern according to the present invention;

Fig. 9 is a block diagram exemplarily illustrating the device for generating a layer mapping pattern according to the present invention;

Fig. 10 illustrates examples of all layer permutations determined by the layer permutation determination module;

Fig. 11 illustrates examples of element patterns respectively generated according to each layer permutation;

Fig. 12 illustrates an example of a layer mapping pattern generated according to the present invention;

Fig. 13 illustrates another example of a layer mapping pattern generated according to the present invention;

Fig. 14 illustrates an embodiment of the step of generating a layer mapping pattern in Fig. 8;

Fig. 15 illustrates an embodiment of the layer mapping pattern generation module in Fig. 9;

Fig. 16 illustrates an example of a layer mapping pattern generated after repetitive layer permutations are removed from the layer mapping pattern in Fig. 12;

Fig. 17 illustrates an example of a layer mapping pattern generated after repetitive layer permutations are removed from the layer mapping pattern in Fig. 13;

Fig. 18 illustrates an example of a layer mapping pattern generated after the layer mapping pattern shown in Fig. 17 is interleaved;

Fig. 19 illustrates another example of a layer mapping pattern generated according to the present invention; and

Fig. 20 illustrates still another example of a layer mapping pattern generated according to the present invention.

Specific Embodiments for Carrying Out the Invention

Embodiments of the present invention are described below with reference to the accompanying drawings. As should be noted, for the sake of clarity, descriptions and illustrations of component parts and method processes irrelevant to the present invention and already known to persons ordinarily skilled in the art are omitted in the accompanying drawings and the description thereof.

In the Description and drawings are disclosed in detail specific embodiments of the present invention, and are pointed out modes of execution for which the principles of the present invention can be employed. As should be understood, the present invention is not restricted thereby in terms of scope. The present invention includes various modifications, variations and equivalents within the scope of the spirits and provisos of the attached claims.

A feature described and/or illustrated with respect to one embodiment may be used in one or more other embodiments in the same or similar manner, combine with features in other embodiments, or replace features in other embodiments.

As should be stressed, the wording "comprising/including" when used in this paper indicates the presence of a feature, a concept, a step or a component part, but does not exclude the presence or addition of one or more other features, concepts, steps or component parts.

A. Method of and Device for Mapping Codeword to Layer

Fig. 2 is a block diagram exemplarily illustrating an ordinary Multi-Input Multi-Output (MIMO) system. First source data and second source data undergo encoding, rate matching and constellation modulation to respectively generate a first codeword and a second codeword; then, the first codeword and the second codeword undergo layer mapping to be respectively mapped to one or more layers; subsequently, modulation symbols on each layer are precoded for transmission over antenna ports. The MIMO system of Fig. 2 is merely exemplary in nature, as the present invention is applicable to currently available MIMO systems and any MIMO system to be developed later. Moreover, the method of and device for mapping codeword to layer according to the present invention is not only adapted to uplink transmission but also adapted to downlink transmission.

The method of mapping codeword to layer according to the present invention includes mapping each of multiple codewords by mapping, on each symbol of a plurality of symbols, different codewords of the multiple codewords to different layer pairs each consisting of two layers of L layers, wherein L=2M and M is an integer larger than 1, wherein each codeword is mapped cyclically across all layer pairs, which can be constituted by the L layers, on the plurality of symbols.

The device for mapping codeword to layer according to the present invention includes a mapping module for mapping each of multiple codewords by mapping, on each symbol of a plurality of symbols, different codewords of the multiple codewords to different layer pairs each consisting of two layers of L layers, wherein L=2M, and M is an integer larger than 1, wherein each codeword is mapped cyclically across all layer pairs, which can be constituted by the L layers, on the plurality of symbols.

All layer pairs, which can be constituted by the L layers, can be divided into two scenarios.

Scenario A: difference in positions of the respective layers in the layer pairs is taken consideration of, i.e., it is considered that each of the layers is ordered in the layer pairs. In other words, all layer pairs, which can be constituted by the L layers, are all permutations formed by extracting two layers from the L layers. Under Scenario A, the number of all layer pairs, which can be constituted by the L layers, is $P_L^2 = L \times (L-1)$. The layer mapping method of cyclically mapping each codeword across all layer pairs, which can be constituted by the L layers under Scenario A, on the plurality of symbols can be referred to as a full-diversity mode, in which case the layer mapping pattern can be referred to as a full-diversity layer mapping pattern.

Scenario B: positions of the respective layers in the layer pairs are not taken consideration of, i.e., all combinations are formed by extracting two layers from the L layers regardless of the order of each of the layers in the layer pairs. Under Scenario B, the number of all layer pairs, which can be constituted by the L layers, is $C_L^2 = L \times (L-1) \div 2$. The layer mapping method of cyclically mapping each codeword across all layer pairs, which can be constituted by the L layers under Scenario B, on the plurality of symbols can also be referred to as a half-full diversity mode, in which case the layer mapping pattern can be referred to as a half-full diversity layer mapping pattern.

As an example, the method of and device for mapping codeword to layer according to the present invention can be carried out in a base station, a relay section and so on in uplink transmission, and can be carried out in a mobile station, a user equipment and the like, which are to transmit signals, in downlink transmission. Of course, the method of and device for mapping codeword to layer according to the present invention may as well be carried out in other component parts of the MIMO system, without departing from the scope of the present invention. Moreover, the method of and device for mapping codeword to layer according to the present invention can be realized as executable codes, in the form of layer mapping function for example, or in any other suitable forms that include software, firmware, dedicated circuit members, programs stored in computer-readable media or machine-usable media.

The method of and device for mapping codeword to layer according to the present invention is applicable to mapping multiple codewords to plural layers, for instance, mapping three codewords to six layers, and mapping four codewords to eight layers. Detailed explanation is made below with an example of mapping two codewords to four layers, while generality is not lost therefrom.

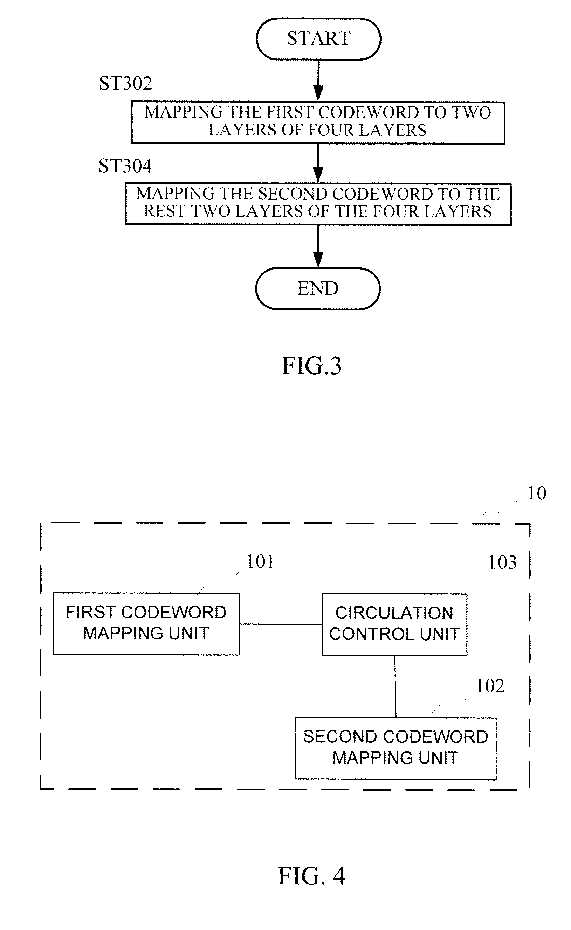

Fig. 3 is a flowchart exemplarily illustrating the method of mapping two codewords to four layers. At Step ST302, namely a first codeword mapping step, the first codeword is mapped, on each symbol of the plurality of symbols, to a layer pair consisting of two layers of the four layers. At Step ST304, namely a second codeword mapping step, the second codeword is mapped, on each symbol of the plurality of symbols, to a layer pair consisting of two layers, to which the first codeword is not mapped, of the four layers, and each codeword is mapped cyclically across all layer pairs, which can be constituted by the four layers, on the plurality of symbols.

In Scenario A, the twelve ordered layer pairs, which can be constituted by the four layers, are {1, 2}, {2, 1}, {1, 3}, {3, 1}, {1, 4}, {4, 1}, {2, 3}, {3, 2}, {2, 4}, {4, 2}, {3, 4}, {4, 3}.

In Scenario B, the six layer pairs, which can be constituted by the four layers regardless of the order of each of the layers in the layer pairs, are {1, 2}, {1, 3}, {1, 4}, {2, 3}, {2, 4} and {3, 4}.

Although the various steps of the method of mapping codeword to layer according to the present invention are exemplarily illustrated in Fig. 3 with a specific sequence, the sequence of executing these steps may also be changed relative to the exemplarily illustrated sequence. Moreover, two consecutively illustrated steps may be executed in parallel or partially in parallel. For instance, mapping of the first codeword and mapping of the second codeword may be executed in parallel or partially in parallel, and it is alternatively also possible to firstly execute mapping of the second codeword and subsequently execute mapping of the first codeword. Moreover, any commands in numbers, state variables, signal amounts or messages can be added to the logic flow to enhance practicality, measurement and failure maintenance and correction. Understandably, all these variations are within the scope of the present invention.

The method shown in Fig. 3 may be executed in a processor, a microprocessor or a controller, and may as well be executed in any adequate manner.

Fig. 4 is a block diagram exemplarily illustrating the device for mapping two codewords to four layers. In Fig. 4, the mapping module 10 according to the present invention includes a first codeword mapping unit 101, a second codeword mapping unit 102 and a circulation control unit 103.

Specifically, on each symbol of the plurality of symbols, the first codeword mapping unit 101 maps the first codeword to a layer pair consisting of two layers of the four layers, while the second codeword mapping unit 102 maps the second codeword to a layer pair consisting of other two layers (namely the layers to which the first codeword is not mapped) of the four layers. The circulation control unit 103 controls the first codeword mapping unit 101 and the second codeword mapping unit 102 such that each codeword is mapped cyclically across all layer pairs, which can be constituted by the four layers, on the plurality of symbols.

The first codeword mapping unit 101, the second codeword mapping unit 102 and the circulation control unit 103 according to the present invention can be realized by hardware circuits, and can also be realized by executable codes, such as software, firmware, dedicated circuit members, programs stored in computer-readable media or machine-usable media.

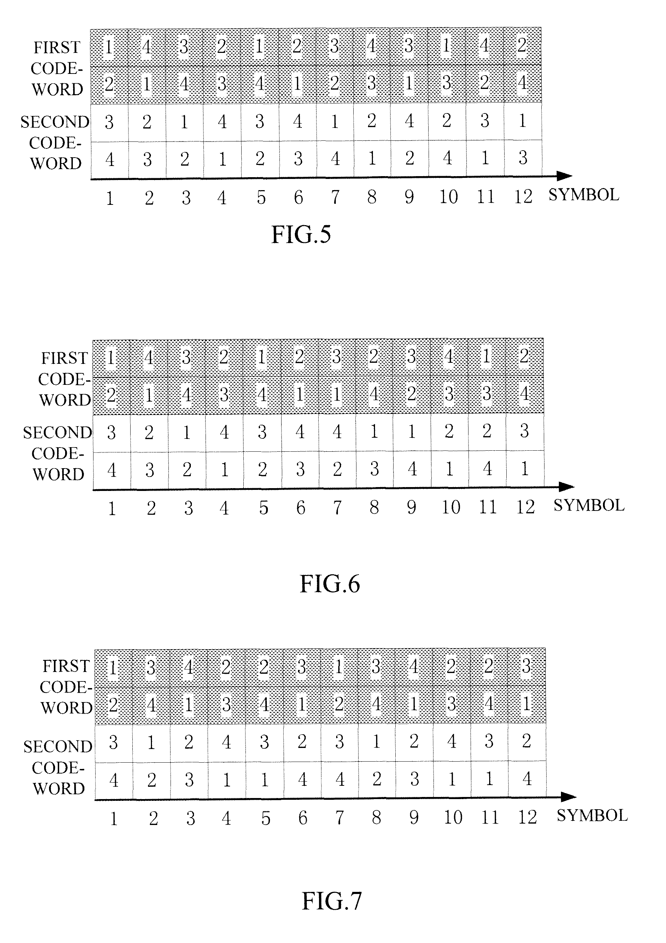

Fig. 5 illustrates the first example of a layer mapping pattern according to the present invention. In Fig. 5, the numeral in each lattice represents the number of a layer, and in this instance the four layers are respectively marked from 1 to 4. In Fig. 5, the numerals below the horizontal axis are reference numbers of symbols, the lattices with shadows represent the numbers of layers to which the first codeword is to be mapped, and the lattices without shadows represent the numbers of layers to which the second codeword is to be mapped. For instance, on the first symbol, the first codeword is mapped to the layer pair {1, 2} and the second codeword is mapped to the layer pair {3, 4}.

As an example, the method of mapping codeword to layer according to the present invention will be described in detail below in combination with the device for mapping codeword to layer according to the present invention shown in Fig. 4 and the layer mapping pattern shown in Fig. 5.

Under control of the circulation control unit 103, on the first symbol, the first codeword mapping unit 101 maps the first codeword to the layer pair {1, 2} formed of the first layer and the second layer, and the second codeword mapping unit 102 maps the second codeword to the layer pair {3, 4} formed of the third layer and the fourth layer. Under control of the circulation control unit 103, on the second symbol, the first codeword mapping unit 101 maps the first codeword to the layer pair {4, 1} formed of the fourth layer and the first layer, and the second codeword mapping unit 102 maps the second codeword to the layer pair {2, 3} formed of the second layer and the third layer.

In a similar way, the mapping is subsequently performed according to the correspondence between codewords and layers shown in the layer mapping pattern illustrated in Fig. 5. The layer mapping pattern illustrated in Fig. 5 will be repeated after the twelfth symbol - that is to say, mapping is performed on the thirteenth symbol in the same way as on the first symbol, whereby the first codeword is mapped to the layer pair {1, 2} and the second codeword is mapped to the layer pair {3, 4}.

On twelve symbols as a cycle, the first codeword is cyclically mapped to all twelve ordered layer pairs {1, 2}, {4, 1}, {3, 4}, {2, 3}, {1, 4}, {2, 1}, {3, 2}, {4, 3}, {3, 1}, {1, 3}, {4, 2} and {2, 4}, which can be constituted by the four layers. Likewise, the second codeword is cyclically mapped to all twelve ordered layer pairs {3, 4}, {2, 3}, {1, 2}, {4, 1}, {3, 2}, {4, 3}, {1, 4}, {2, 1}, {4, 2}, {2, 4}, {3, 1} and {1, 3}, which can be constituted by the four layers.

Therefore, according to the method of and device for mapping codeword to layer according to the present invention, the first codeword and the second codeword are cyclically mapped to all layer pairs, which can be constituted by four layers, on a plurality of symbols - that is to say, each of the first codeword and the second codeword can cover all layer pairs (namely virtual antenna pairs). Therefore, mapping in full-diversity mode can be achieved according to the layer mapping pattern illustrated in Fig. 5.

In comparison with the prior-art method of mapping codeword to layer without covering all layer pairs, the mapping method of the full-diversity mode can achieve better diversity performance, and can hence enhance decoding quality at the decoding terminal in the MIMO system.

It is not necessary for the method of and device for mapping codeword to layer according to the present invention to adopt the layer mapping pattern illustrated in Fig. 5, as it is feasible to adopt any layer mapping pattern in which each codeword can be cyclically mapped to all layer pairs on a plurality of symbols.

Fig. 6 illustrates the second example of a layer mapping pattern according to the present invention. Unlike the layer mapping pattern illustrated in Fig. 5, according to the layer mapping pattern illustrated in Fig. 6, on the seventh to the twelfth symbols, the first codeword is sequentially mapped to layer pairs {3, 1}, {2, 4}, {3, 2}, {4, 3}, {1, 3} and {4, 2}, and the second codeword is sequentially mapped to layer pairs {4, 2}, {1, 3}, {1, 4}, {2, 1}, {2, 4} and {3, 1}.

According to the layer mapping pattern illustrated in Fig. 5, on the seventh to the twelfth symbols, the first codeword is sequentially mapped to layer pairs {3, 2}, {4, 3}, {3, 1}, {1, 3}, {4, 2} and {2, 4}, and the second codeword is sequentially mapped to layer pairs {1, 4}, {2, 1}, {4, 2}, {2, 4}, {3, 1} and {1, 3}. Accordingly, on the eighth to ninth symbols, the first codeword is continuously mapped to the third layer; on the ninth to tenth symbols the first codeword is continuously mapped to the first layer while the second codeword is continuously mapped to the second layer; and on the eleventh to twelfth symbols, the first codeword is continuously mapped to the second layer while the second codeword is continuously mapped to the first layer. Therefore, according to the mapping pattern illustrated in Fig. 5, in two temporally continuous symbols, there is the circumstance in which each of the first codeword and the second codeword is continuously mapped to the same and one layer. When the channel state of this layer (the first layer, for example) is inferior (relatively low in signal-to-noise ratio, for example), continuous mapping of the codeword to this layer would greatly deteriorate the decoding performance of the codeword, increase block error rate of the system, and thereby reduce system throughput. However, according to the layer mapping pattern illustrated in Fig. 6, there is already no such problem of the same and one codeword being continuously mapped to the same and one layer on two temporally continuous symbols, so that it is possible to overcome the reduction in system performance due to deterioration of the decoding performance when the channel state of a certain layer is inferior (relatively low in signal-to-noise ratio, for example) is overcome.

Fig. 7 illustrates the third example of a layer mapping pattern according to the present invention. In comparison with the layer mapping patterns illustrated in Figs. 5 and 6, the first codeword is cyclically mapped to layer pairs {1, 2}, {3, 4}, {2, 3}, {4, 1}, {2, 4} and {3, 1}, and the second codeword is cyclically mapped to layer pairs {3, 4}, {1, 2}, {2, 3}, {4, 1}, {3, 1} and {2, 4}. In the layer mapping pattern illustrated in Fig. 7, the layer mapping pattern on the seventh to twelfth symbols is the same as the layer mapping pattern on the first to sixth symbols.

According to the layer mapping pattern illustrated in Fig. 7, on six symbols, each codeword is cyclically mapped to all six layer pairs, which can be constituted by four layers regardless of the order of each layer in the layer pairs. Accordingly, mapping in half-full diversity mode can be achieved according to the layer mapping pattern illustrated in Fig. 7.

In comparison with the prior-art method of mapping codeword to layer without covering all layer pairs, the mapping method of the half-full diversity mode can achieve better diversity performance, and can hence enhance decoding quality at the decoding terminal.

Moreover, according to the method of and device for mapping codeword to layer according to the present invention, it is possible that each codeword can not be continuously mapped to the same and one layer on two adjacent symbols. Under such circumstance, it is possible to overcome the reduction in system performance due to deterioration of the decoding performance when the channel state of a certain layer is inferior (relatively low in signal-to-noise ratio, for example).

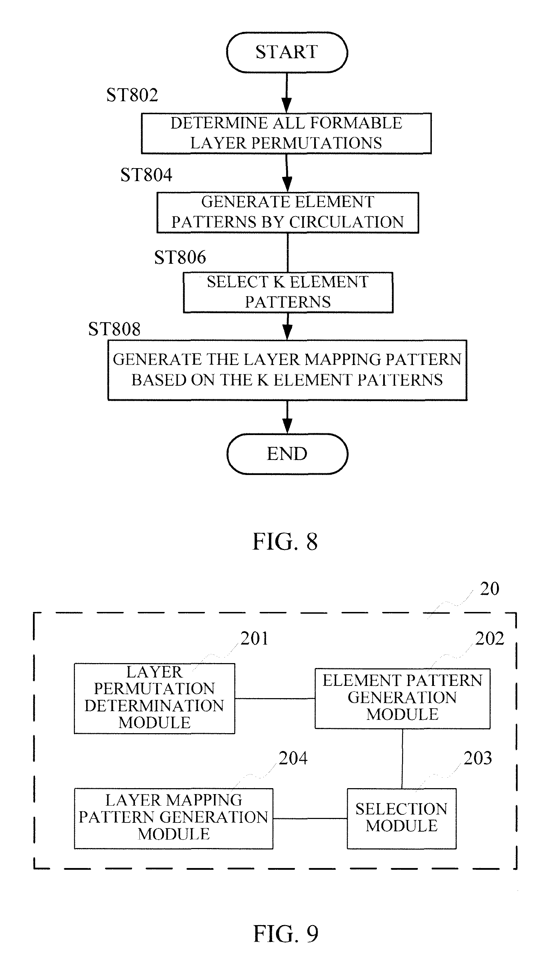

The method of and device for mapping codeword to layer according to the present invention may make use of various methods to generate the layer mapping pattern, and the present invention does not make any restriction thereto. As an example, the method and device for generating a layer mapping pattern according to the present invention will be described in greater detail below with reference to Figs. 8 and 9.

B. Method and Device for Generating Layer Mapping Pattern

Fig. 8 is a flowchart exemplarily illustrating the method for generating a layer mapping pattern according to the present invention, and Fig. 9 is a block diagram exemplarily illustrating the device for generating a layer mapping pattern according to the present invention.

The method for generating a layer mapping pattern illustrated in Fig. 8 and the device for generating a layer mapping pattern illustrated in Fig. 9 may be carried out in a base station, and may also be carried out in a user equipment. When they are carried out in a base station, the base station may notify the user equipment of the generated layer mapping pattern. Likewise, when they are carried out in a user equipment, the user equipment may notify the base station of the generated layer mapping pattern.

As shown in Fig. 9, the device 20 for generating a layer mapping pattern used for a Multi-Input Multi-Output system according to the present invention includes a layer permutation determination module 201, an element pattern generation module 202, a selection module 203 and a layer mapping pattern generation module 204.

The layer permutation determination module 201, the element pattern generation module 202, the selection module 203 and the layer mapping pattern generation module 204 according to the present invention can be realized by hardware circuits, and can also be realized by executable codes ,such as software, firmware, dedicated circuit members, programs stored in computer-readable media or machine-usable media.

Specifically, in step ST802, the layer permutation determination module 201 determines all layer permutations formed of L layers used in the MIMO system when a first layer of the L layers is fixed in a first order and orders of L-1 layers of the L layers except the first layer are changed, wherein the number of the all layer permutations is $N = P_{L-1}^{L-1}$, wherein L=2M, and M is an integer larger than 1.

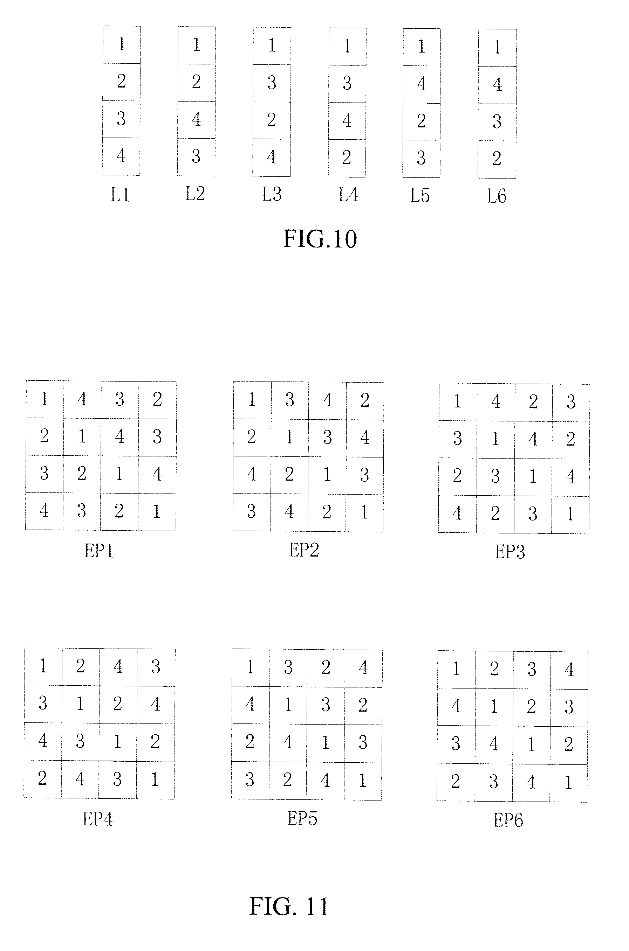

For instance, under the circumstance in which two codewords are mapped to four layers, the number of layers is L=4, and the number of all layer permutations is $N = P_3^3 = 3 \times 2 \times 1 = 6$. Fig. 10 illustrates all six layer permutations determined by the layer permutation determination module 201, as layer permutation L1: {1, 2, 3, 4}, layer permutation L2: {1, 2, 4, 3}, layer permutation L3: {1, 3, 2, 4}, layer permutation L4: {1, 3, 4, 2}, layer permutation L5: {1, 4, 2, 3}, and layer permutation L6: {1, 4, 3, 2}.

Then in step ST804, the element pattern generation module 202 generates one element pattern for each layer permutation of all the determined layer permutations by combining the layer permutation and (L-1) new layer permutations generated by cycle-shifting the layer permutation. N element patterns are generated altogether in Step ST804. For instance, it is possible to generate L-1 new layer permutations by cycle-shifting each layer permutation once for one bit, and then sequentially order this layer permutation and the generated L-1 new layer permutations, to thereby generate one element pattern. However, as should be understood by persons skilled in the art, the present invention is not limited thereto, as it is also possible to generate the L-1 new layer permutations by other manner, such as by cycle-shifting once for three bits.

For instance, under the circumstance in which two codewords are mapped to four layers, for each layer permutation in layer permutation L1 to layer permutation L6, the element pattern generation module 202 takes this layer permutation as an element layer permutation, and generates three new layer permutations by cycle-shifting the element layer permutation, such as once for one bit.

Subsequently, the element layer permutation and the three generated new layer permutations are sequentially combined together to generate one element pattern. Fig. 11 illustrates element pattern EP1 to element pattern EP6 respectively generated according to layer permutation L1 to layer permutation L6.

More specifically, taking the layer permutation L3 for instance, the element pattern generation module 202 takes this layer permutation L3 as an element layer permutation, and generates three new layer permutations by cycle-shifting the element layer permutation, such as once for one bit. The element layer permutation L3 and the three generated new layer permutations are sequentially combined together to generate one element pattern EP3 as shown in Fig. 11.

Moreover, as should be understood by persons skilled in the art, the combination of each layer permutation and the (L-1) new layer permutations generated by cycle-shifting the layer permutation is not restricted to sequential combination, as it is also possible to perform the combination in various other manner.

In step ST806, the selection module 203 selects K element patterns from the generated N element patterns, wherein K is an integer larger than 1 and not larger than N. Then, in step ST808, the layer mapping pattern generation module 204 generates the layer mapping pattern based on the selected K element patterns, wherein when each codeword of multiple codewords is mapped in the MIMO system by mapping, on each symbol of a plurality of symbols, different codewords of the multiple codewords to different layer pairs each consisting of two layers of the L layers according to the generated layer mapping pattern, each codeword is mapped cyclically across all layer pairs, which can be constituted by the L layers, on the plurality of symbols. For instance, the K element patterns are jointed, head-to-end, to one another, as the layer mapping pattern. Jointing head-to-end means to sequentially arrange the element patterns one after the other. As comprehensible to persons skilled in the art, it is also possible to use other manner, such as by alternately arranging the layer permutations in the multiple element patterns, to generate the layer mapping pattern based on the selected K element patterns.

For instance, when two codewords are mapped to four layers, under Scenario A (in which four layers can constitute twelve ordered layer pairs), the selection module 203 selects K element patterns from the six element pattern EP1 to element pattern EP6 as illustrated in Fig. 11, including, for instance, the four element patterns including the element pattern EP1, the element pattern EP3, the element pattern EP5 and the element pattern EP6. Thereafter, the layer mapping pattern generation module 204 joints, head-to-end, the element pattern EP1, the element pattern EP3, the element pattern EP5 and the element pattern EP6 (that is to say, the element pattern EP1 is first arranged, and the element pattern EP3 is then arranged after the last layer permutation of the element pattern EP1 and from the first layer permutation of the element pattern EP3; the process goes so on and so forth), as the layer mapping pattern.

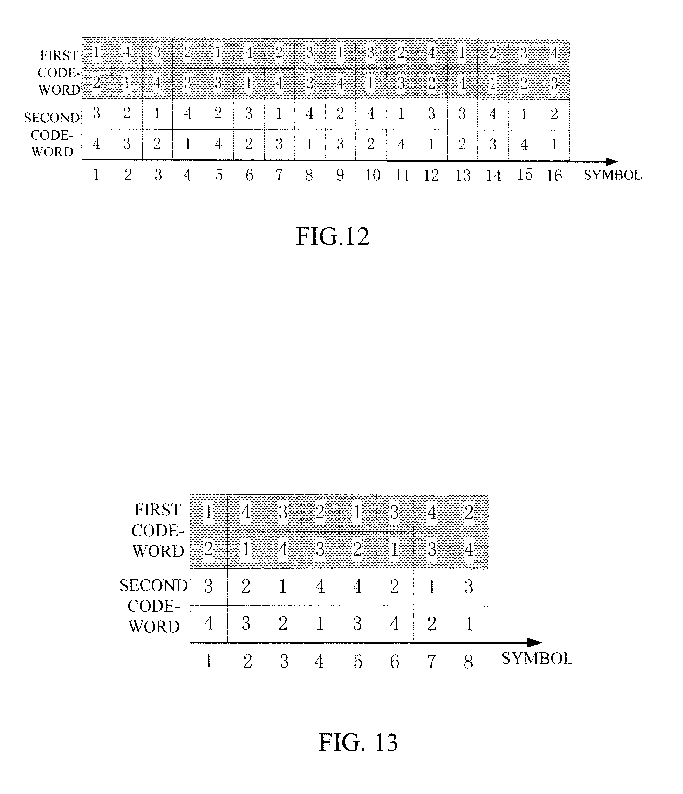

Fig. 12 illustrates the generated layer mapping pattern. As can be seen from Fig. 12, in the MIMO system with sixteen symbols as one circulation period according to the layer mapping pattern, when on each symbol of the sixteen symbols, the first codeword is mapped to a layer pair formed of two layers in four layers, and the second codeword is mapped to a layer pair formed of the other two layers (to which the first codeword is not mapped) in the four layers, the first codeword, on the sixteen symbols, is cyclically mapped to all twelve ordered layer pairs {1, 2}, {4, 1}, {3, 4}, {2, 3}, {1, 3}, {2, 4}, {3, 2}, {1, 4}, {3, 1}, {4, 2}, {2, 1} and {4, 3}, which can be constituted by the four layers under Scenario A, and the second codeword, on the sixteen symbols, is cyclically mapped to all twelve ordered layer pairs {3, 4}, {2, 3}, {1, 2}, {4, 1}, {2, 4}, {3, 2}, {1, 3}, {4, 2}, {1, 4}, {3, 1}, {4, 3} and {2, 1}, which can be constituted by the four layers under Scenario A.

For instance, when two codewords are mapped to four layers, under Scenario B (in which four layers can constitute six layer pairs regardless of the order of each layer in the layer pairs), the selection module 203 selects K element patterns from the six element patterns EP1 to EP6 as illustrated in Fig. 11, for instance, the two element patterns including the element pattern EP1 and the element pattern EP2. Thereafter, the layer mapping pattern generation module 204 joints, head-to-end, the element pattern EP1 and the element pattern EP2, as the layer mapping pattern. Fig. 13 illustrates the generated layer mapping pattern. As can be seen from Fig. 13, in the MIMO system with eight symbols as one circulation period according to the layer mapping pattern, when the first codeword, on each symbol of the eight symbols, is mapped to a layer pair formed of two layers in four layers, and the second codeword is mapped to a layer pair formed of the other two layers (to which the first codeword is not mapped) in the four layers, the first codeword, on the eight symbols, is cyclically mapped to all six layer pairs {1, 2}, {4, 1}, {3, 4}, {3, 2}, {3, 1} and {2, 4}, which can be constituted by the four layers under Scenario B (under which it is considered that the layer pair {4, 3} is the same as the layer pair {3, 4}), and the second codeword, on the eight symbols, is cyclically mapped to all six layer pairs {3, 4}, {2, 3}, {1, 2}, {4, 1}, {2, 4} and {3, 1}, which can be constituted by the four layers under Scenario B.

As can be seen from Figs. 12 and 13, although the layer mapping pattern formed by the aforementioned method can make each codeword be cyclically mapped to all layer pairs, which can be constituted by a plurality of layers, some layer pairs thereof repetitively appear - that is to say, some layer pairs are mapped to more times than other layer pairs are mapped to.

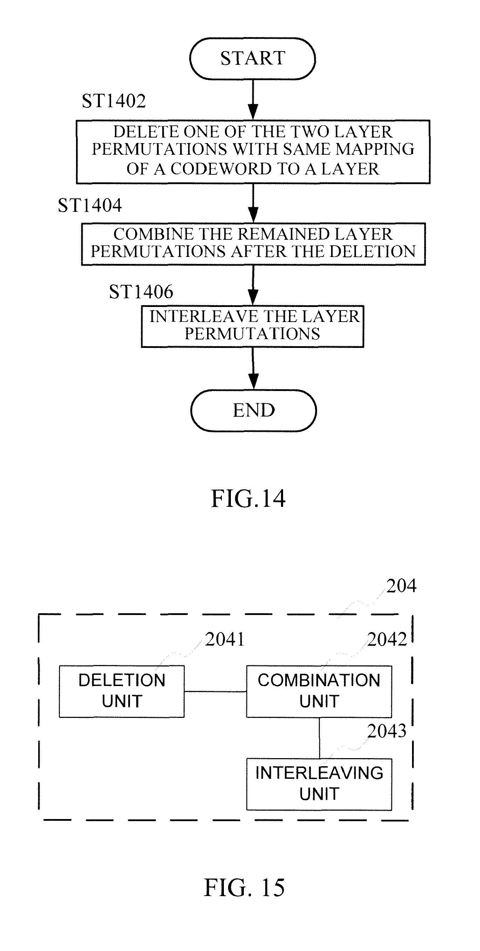

In order to solve this problem, it is needed to delete repetitive layer pairs. A preferred embodiment for deleting repetitive layer pairs from a layer mapping pattern will be described in greater detail below with reference to Figs. 14 and 15. Fig. 14 illustrates an embodiment of the step (namely Step ST808) of generating a layer mapping pattern in Fig. 8, and Fig. 15 illustrates an embodiment of the layer mapping pattern generation module 204 in Fig. 9.

As shown in Fig. 15, the layer mapping pattern generation module 204 according to the present invention includes a deletion unit 2041, a combination unit 2042 and an interleaving unit 2043.

The deletion unit 2041, the combination unit 2042 and the interleaving unit 2043 according to the present invention can be realized by hardware circuits, and can also be realized by executable codes, such as software, firmware, dedicated circuit members, programs stored in computer-readable media or machine-usable media.

More specifically, in step ST1402, the deletion unit 2041 deletes any repetitive layer permutation from the K element patterns selected by the selection module 203. Specifically, the deletion unit 2041 deletes, for any two layer permutations of the K element patterns, one of the two layer permutations if they have a same mapping relation of a codeword to a layer pair (namely the same codeword is mapped to the same layer pair).

Usually, the K element patterns can be jointed, head-to-end, to each other, and each layer permutation is then compared seriatim with the layer permutations at the right side thereof starting from the first layer permutation at the leftmost side; if the compared two layer permutations have a same mapping relation of a codeword to a layer (namely the same codeword corresponds to the same layer pair), the right one of the compared two layer permutations is deleted.

As should be understood by persons skilled in the art, in the deleting step ST1402, the deletion unit 2041 can delete one of the two layer permutations when the compared two layer permutations have only partial same mapping relation of a codeword to a layer, for instance, the first codewords have the same mapping relation, while the second codewords do not have the same mapping relation. Alternatively, in the deleting step ST1402, the deletion unit 2041 deletes one of the two layer permutations only when the entire codewords in the compared two layer permutations have a same mapping relation of a codeword to a layer.

Subsequently, in step ST1404, the combination unit 2042 combines layer permutations remained in the K element patterns after the deletion is made by the deletion unit 2041. For instance, the remaining layer permutations are combined together in such a manner that each layer permutation to the right side of the deleted layer permutations shifts leftwards. At the same time, as should be understood by persons skilled in the art, the present invention is not limited thereto, as it is possible to make the combination via various manner, such as by randomly arranging each of the remaining layer permutations.

Detailed description is made below with examples of Scenario A and Scenario B being applied in mapping two codewords to four layers.

Circumstance under Scenario A:

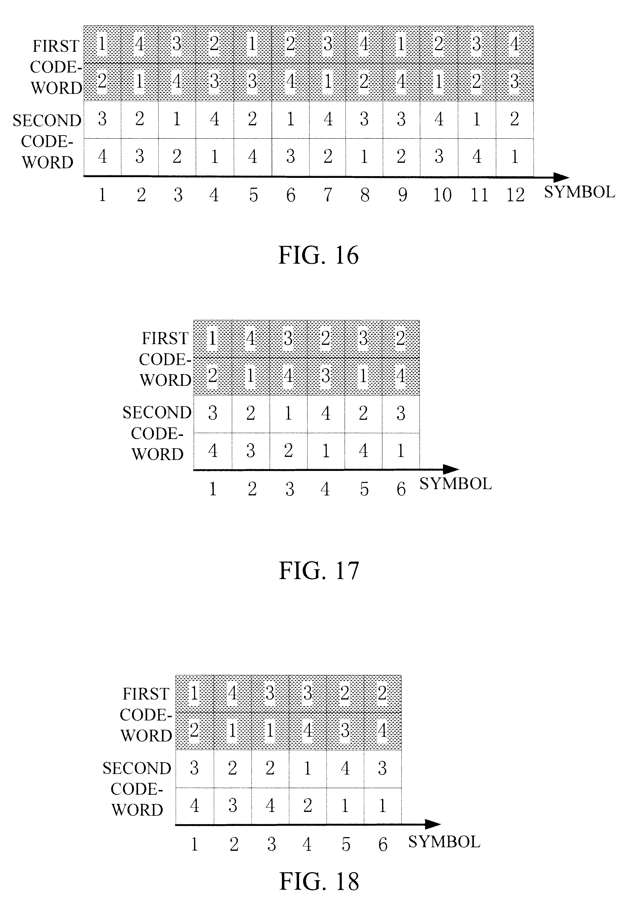

For instance, when the selection module 203 selects the element pattern EP1, the element pattern EP3, the element pattern EP5 and the element pattern EP6, the element pattern EP1, the element pattern EP3, the element pattern EP5 and the element pattern EP6 are jointed, head-to-end, to one another, as shown in Fig. 12. The thus-jointed pattern is also referred to as a primary layer mapping pattern. Starting from the first layer permutation, comparison is made seriatim with the fifteen layer permutations to the right side thereof, whereupon it can be found that the first codewords of the second layer permutation and the sixth layer permutation both correspond to the layer pair {4, 2}, and the second codewords thereof correspond to different layer pairs {2, 3} and {3, 2}. Since the first layer permutation and the sixth layer permutation have a same mapping relation of first codewords to a layer (namely the first layer permutation and the sixth layer permutation have a same mapping of a codeword to a layer), the sixth layer permutation is deleted. Likewise, since the second layer permutation and the ninth layer permutation have a same mapping relation of second codewords to a layer, the ninth layer permutation is deleted. After completion of deletion for each layer permutation, the combination module 2042 combines together the remaining twelve layer permutations (also referred to as secondary layer mapping pattern) in the primary layer mapping pattern, as shown in Fig. 16.

Circumstance under Scenario B:

For instance, when the selection module selects the element pattern EP1 and the element pattern EP2, the element pattern EP1 and the element pattern EP2 are jointed, head-to-end, to one another, as shown in Fig. 13. The thus-jointed pattern is also referred to as a primary layer mapping pattern. Then, starting from the first layer permutation, comparison is made seriatim with the seven layer permutations to the right side thereof, whereupon it can be found that the first codewords of the first layer permutation and the fifth layer permutation both correspond to the layer pair {1, 2}, and the second codewords thereof both correspond to the layer pair {3, 4} (because it is considered under Scenario B that the layer pairs {4, 3} and {3, 4} are the same layer pair), the fifth layer permutation is hence deleted. Likewise, since the third layer permutation is the same as the seventh layer permutation, the seventh layer permutation is deleted.

After completion of deletion for each layer permutation, the combination module 2042 combines together the remaining six layer permutations (also referred to as secondary layer mapping pattern) in the primary layer mapping pattern, as shown in Fig. 17.

Thereafter, in Step ST1406, the interleaving unit 2043 interleaves the layer permutations in the layer mapping pattern formed by the combination of the combination unit 2042 such that each codeword is not mapped continuously to a same and one layer on two adjacent symbols when each codeword of the multiple codewords is mapped in the MIMO system by mapping, on each symbol of a plurality of symbols, different codewords of the multiple codewords to different layer pairs of the L layers according to the interleaved layer mapping pattern.

When each of the two codewords is mapped by mapping, on each symbol of a plurality of symbols, the first codeword and the second codeword to different layer pairs in the four layers according to the secondary layer mapping pattern illustrated in Fig. 17 respectively, the first codeword is mapped to the second layer and the third layer on the fourth symbol, and is then mapped to the third layer and the first layer on the fifth symbol, so the first codeword is continuously mapped to the same and one layer, namely the third layer, on the adjacent fourth and fifth symbols. Accordingly, it is needed to interleave the secondary layer mapping pattern illustrated in Fig. 17, namely to change the arrangement order of the layer permutations. The positions of the fifth layer permutation and the sixth layer permutation in the secondary layer mapping pattern illustrated in Fig. 17 are exchanged. The exchanged layer permutation pattern is as shown in Fig. 18. After the interleaving, the first codeword and the second codeword are not continuously mapped to the same and one layer on adjacent two symbols.

As should be understood by persons skilled in the art, although interleaving is performed by changing the positions of adjacent layer permutations, the present invention is not linited thereto, as it is possible to achieve via various manner as long as each codeword is finally not continuously mapped to the same and one layer on two adjacent symbols.

Moreover, as should also be understood by persons skilled in the art, the interleaving step 1406 in Fig. 14 and the interleaving unit 2043 in Fig. 15 are not indispensable. For instance, there is no need to perform interleaving in the layer mapping pattern illustrated in Fig. 16 because none of the first codeword and the second codeword would be continuously mapped to the same and one layer on adjacent two symbols.

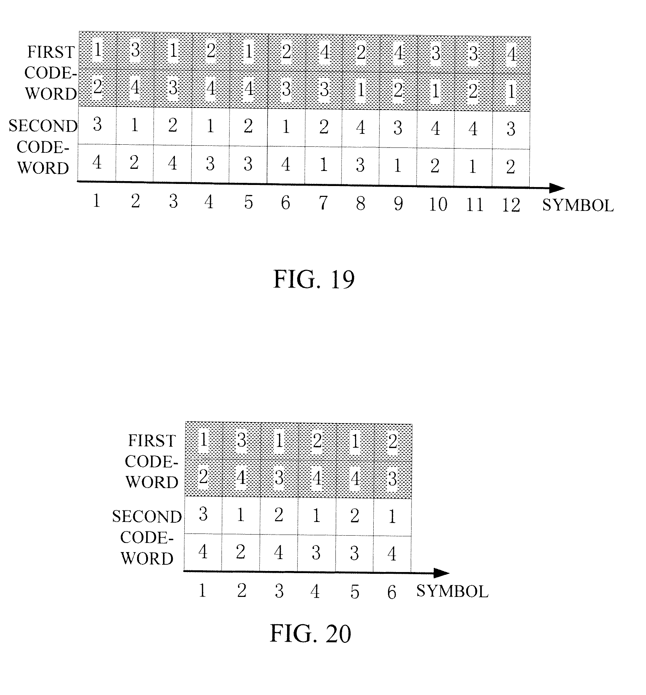

As examples, Fig. 19 illustrates another example of a full-diversity layer mapping pattern generated by the method for generating a layer mapping pattern according to the present invention; and Fig. 20 illustrates another example of a half-full diversity layer mapping pattern generated by the method for generating a layer mapping pattern according to the present invention.

Moreover, the method and device for generating a layer mapping pattern according to the present invention can be used not only to generate the full-diversity layer mapping pattern and the half-full diversity layer mapping pattern, but also to generate other types of layer mapping patterns. For instance, in step ST806, the selection module 203 may select an element pattern to generate a layer mapping pattern. Under such circumstance, the operations of the other steps and modules are identical with those in generating the full-diversity layer mapping pattern and the half-full diversity layer mapping pattern, so the detailed description thereof is omitted.

Furthermore, in the method for generating a layer mapping pattern according to the present invention, the steps of generating the layer mapping pattern may also not include the deleting step, and instead merely include the combining step and the interleaving step. Likewise, in the device for generating a layer mapping pattern according to the present invention, the modules for generating the layer mapping pattern may also not include the deletion unit, and instead merely include the combination unit and the interleaving unit. That is to say, when a layer mapping pattern is generated based on the selected K element patterns, the generated layer mapping pattern after the combination unit has combined the selected K element patterns may be interleaved by the interleaving unit, so as to generate the final layer mapping pattern.

The present invention further relates to a storage medium comprising machine-readable program code, wherein when the program code is executed on an MIMO system or an information processing system, the program code enables the MIMO system or the information processing system to execute the method of mapping codeword to layer according to the present invention or the method for generating a layer mapping pattern used for an MIMO system according to the present invention.

The present invention still further relates to a program product comprising machine-executable instructions, wherein when the instructions are executed by an MIMO system or an information processing system, the instructions enable the MIMO system or the information processing system to execute the method of mapping codeword to layer according to the present invention or the method for generating a layer mapping pattern used for an MIMO system according to the present invention.

Moreover, it is obvious that the various operational processes of the aforementioned methods according to the present invention can also be realized in computer-executable programs stored in various machine-readable storage media.

Furthermore, the objective of the present invention can also be achieved thus, that the storage media storing the aforementioned executable program codes are directly or indirectly supplied to a system or a device, and a computer or a central processing unit (CPU) in the system or the device reads and executes the program codes. In this case, insofar as the system or the device has program-executing functions, the embodiment of the present invention is not limited to the program, and the program can also be in any random form, such as a target program, a program executed by an interpreter, or a script program supplied to an operating system.

The machine-readable storage media include, but are not limited to, various memories and storage units, semiconductor devices, such magnetic disc units as optical, magnetic and magneto-optical discs, and other media adapted to store information.

Moreover, the computer executes the program via corresponding websites connected to the Internet and by downloading and installing the computer program code according to the present invention in the computer, whereby the present invention can also be realized.

Finally, as should be further explained, such relational terms as left and right, first and second, etc., when used in this paper, are merely used to differentiate one entity or operation from another entity or operation, without necessarily requiring or suggesting that these entities or operations have therebetween any such actual relation or sequence. Moreover, terms "include(s)/including", "comprise(s)/comprising" and any variants thereof are meant to cover nonexclusive inclusion, so that processes, methods, objects or devices that include a series of essentials not only include these essentials, but also include other essentials not explicitly listed, or further include essentials inherent in the processes, methods, objects or devices. Without more restrictions, an essential defined by the wording of "including a..." does not preclude the further inclusion of other identical essentials in the processes, methods, objects or devices that include this essential.

Although embodiments of the present invention are described in detail above with reference to the accompanying drawings, it should be understood that the embodiments described above are merely used to describe the present invention, rather than to restrict the present invention. To persons skilled in the art, it is possible to make various modifications and variations of the aforementioned embodiments without departing from the spirit and scope of the present invention. Therefore, the scope of the present invention is defined by the attached claims and analogs thereof.

## Claims

1. A method of mapping codeword to layer in Multi-Input Multi-Output system, comprising:

   mapping each of multiple codewords by mapping, on each symbol of a plurality of symbols, different codewords of the multiple codewords to different layer pairs each consisting of two layers of L layers, wherein L=2M, and M is an integer larger than 1,
   wherein each codeword is mapped cyclically across all layer pairs, which can be constituted by the L layers, on the plurality of symbols.

**2.** The method according to claim 1, wherein, the multiple codewords are two codewords including a first codeword and a second codeword, and the L layers including four layers, wherein, the mapping comprising:

mapping, on each symbol of the plurality of symbols, the first codeword to a layer pair consisting of two layers of the four layers; and mapping, on each symbol of the plurality of symbols, the second codeword to a layer pair consisting of other two layers of the four layers, wherein each codeword is mapped cyclically across all layer pairs, which can be constituted by the four layers, on the plurality of symbols.

**3.** The method according to claim 1, wherein the all layer pairs are (L x (L -1) / 2) layer pairs without regard to an order of each layer in layer pair, or (L × (L - 1)) ordered layer pairs.

**4.** A device for mapping codeword to layer in Multi-Input Multi-Output system, comprising:

a mapping module for mapping each of multiple codewords by mapping, on each symbol of a plurality of symbols, different codewords of the multiple codewords to different layer pairs each consisting of two layers of L layers, wherein L=2M, and M is an integer larger than 1, wherein each codeword is mapped cyclically across all layer pairs, which can be constituted by the L layers, on the plurality of symbols.

**5.** The device according to claim 4, wherein, the multiple codewords are two codewords including a first codeword and a second codeword, and the L layers including four layers, wherein, the mapping module comprising:

a first codeword mapping unit for mapping, on each symbol of the plurality of symbols, the first codeword to a layer pair consisting of two layers of the four layers; a second codeword mapping unit for mapping, on each symbol of the plurality of symbols, the second codeword to a layer pair consisting of other two layers of the four layers; and a circulation control unit for controlling the first codeword mapping unit and the second codeword mapping unit such that each codeword is mapped cyclically across all layer pairs, which can be constituted by the four layers, on the plurality of symbols.

**6.** The device according to claim 4, wherein the all layer pairs are (L x (L - 1) / 2) layer pairs without regard to an order of each layer in layer pair, or (L x (L -1)) ordered layer pairs.

**7.** A method for generating a layer mapping pattern used for a Multi-Input Multi-Output system, comprising:

determining all layer permutations formed of L layers used in the Multi-Input Multi-Output system when a first layer of the L layers is fixed in a first order and orders of (L-1) layers of the L layers except the first layer are changed, wherein the number of the all layer permutations is N

$$= N = P_{L-1}^{L-1},$$ wherein L=2M, and M is an integer larger than 1;

generating one element pattern for each layer permutation of all the determined layer permutations by combining the layer permutation and (L-1) new layer permutations generated by cycle-shifting the layer permutation; selecting K element patterns from the generated N element patterns, wherein K is an integer larger than 1 and not larger than N; generating the layer mapping pattern based on the selected K element patterns, wherein, when each codeword of multiple codewords is mapped in the Multi-Input Multi-Output system by mapping, on each symbol of a plurality of symbols, different codewords of the multiple codewords to different layer pairs each consisting of two layers of the L layers according to the generated layer mapping pattern, each codeword is mapped cyclically across all layer pairs, which can be constituted by the L layers, on the plurality of symbols.

**8.** The method according to claim 7, wherein the generating the layer mapping pattern comprising:

for any two layer permutations of the K element patterns, deleting one of the two layer permutations if they have a same mapping of a codeword to a layer pair; and combining layer permutations remained in the K element patterns after the deletion, as the layer mapping pattern.

**9.** The method according to claim 8, wherein the generating the layer mapping pattern further comprising:

interleaving the layer permutations in the layer mapping pattern such that each codeword is not mapped continuously to a same layer on two adjacent symbols when each codeword of the multiple codewords is mapped in the Multi-Input Multi-Output system by mapping, on each symbol of a plurality of symbols, different codewords of the multiple codewords to different layer pairs of the L layers according to the interleaved layer mapping pattern.

10. A device for generating a layer mapping pattern used for a Multi-Input Multi-Output system, comprising:

a layer permutation determination module for determining all layer permutations formed of L layers used in the Multi-Input Multi-Output system when a first layer of the L layers is fixed in a first order and orders of (L-1) layers of the L layers except the first layer are changed, wherein the number of the all layer permutations is

$$N = P_{L-1}^{L-1},$$ wherein L=2M, and M is an integer larger than 1;

an element pattern generation module for generating one element pattern for each layer permutation of all the determined layer permutations by combining the layer permutation and (L-1) new layer permutations generated by cycle-shifting the layer permutation;

a selection module for selecting K element patterns from the generated N element patterns, wherein K is an integer larger than 1 and not larger than N;

a layer mapping pattern generation module for generating the layer mapping pattern based on the selected K element patterns,

wherein when each codeword of multiple codewords is mapped in the Multi-Input Multi-Output system by mapping, on each symbol of a plurality of symbols, different codewords of the multiple codewords to different layer pairs each consisting of two layers of the L layers according to the generated layer mapping pattern, each codeword is mapped cyclically across all layer pairs, which can be constituted by the L layers, on the plurality of symbols.

11. The device according to claim 10, wherein the layer mapping pattern generation module comprising:

a deletion unit for deleting, for any two layer permutations of the K element patterns, one of the two layer permutations if they have a same mapping of a codeword to a layer pair; and
a combination unit for combining layer permutations remained in the K element patterns after the deletion is made by the deletion unit, as the layer mapping pattern.

12. The device according to claim 11, wherein the layer mapping pattern generation module further comprising:

an interleaving unit for interleaving the layer permutations in the layer mapping pattern such that each codeword is not mapped continuously to a same layer on two adjacent symbols when each codeword of the multiple codewords is mapped in the Multi-Input Multi-Output system by mapping, on each symbol of a plurality of symbols, different codewords of the multiple codewords to different layer pairs of the L layers according to the interleaved layer mapping pattern.

13. A storage medium comprising machine-readable program code, wherein when the program code is executed on a Multi-Input Multi-Output system or an information processing system, the program code makes the Multi-Input Multi-Output system or the information processing system execute the method according to any one of claims 1-3.

14. A program product comprising machine-executable instructions, wherein when the instructions are executed by a Multi-Input Multi-Output system or an information processing system, the instructions make the Multi-Input Multi-Output system or the information processing system execute the method according to any one of claims 1-3.

15. A storage medium comprising machine-readable program code, wherein when the program code is executed on a Multi-Input Multi-Output system or an information processing system, the program code makes the Multi-Input Multi-Output system or the information processing system execute the method according to any one of claims 7-9.

16. A program product comprising machine-executable instructions, wherein when the instructions are executed by a Multi-Input Multi-Output system or an information processing system, the instructions make the Multi-Input Multi-Output system or the information processing system execute the method according to any one of claims 7-9.

CODEWORD 1

CODEWORD 2

[1] LAYER 1    [2] LAYER 2        [3] LAYER 3    [4] LAYER 4        640

VIRTUAL ANTENNA

| | 1 | 2 | 3 | 4 | 5 | 6 | 7 | 8 | 9 | 10 | 11 | 12 | | K-3 | K-2 | K-1 | K |
|---|---|---|---|---|---|---|---|---|---|---|---|---|---|---|---|---|---|
| 1 | 1 | 2 | 3 | 4 | 1 | 2 | 3 | 4 | 1 | 2 | 3 | 4 | ... | 1 | 2 | 3 | 4 |
| 2 | 4 | 1 | 2 | 3 | 4 | 1 | 2 | 3 | 4 | 1 | 2 | 3 | ... | 4 | 1 | 2 | 3 |
| 3 | 3 | 4 | 1 | 2 | 3 | 4 | 1 | 2 | 3 | 4 | 1 | 2 | ... | 3 | 4 | 1 | 2 |
| 4 | 2 | 3 | 4 | 1 | 2 | 3 | 4 | 1 | 2 | 3 | 4 | 1 | ... | 2 | 3 | 4 | 1 |

FREQUENCY

SELECTED VIRTUAL ANTENNA

FIG. 1

① FIRST SOURCE DATA → ENCODING → RATE MATCHING → CONSTE-LLATION MODULATION → CODE-WORD → LAY MAPPING → PRE-CODING

② SECOND SOURCE DATA → ENCODING → RATE MATCHING → CONSTE-LLATION MODULATION → CODE-WORD → LAY MAPPING → PRE-CODING

FIG. 2

START

ST302

MAPPING THE FIRST CODEWORD TO TWO
LAYERS OF FOUR LAYERS

ST304

MAPPING THE SECOND CODEWORD TO THE
REST TWO LAYERS OF THE FOUR LAYERS

END

FIG.3

10

101                                                    103

FIRST CODEWORD
MAPPING UNIT

CIRCULATION
CONTROL UNIT

102

SECOND CODEWORD
MAPPING UNIT

FIG. 4

| | 1 | 2 | 3 | 4 | 5 | 6 | 7 | 8 | 9 | 10 | 11 | 12 |
|---|---|---|---|---|---|---|---|---|---|----|----|----|
| FIRST CODE-WORD | 1 | 4 | 3 | 2 | 1 | 2 | 3 | 4 | 3 | 1 | 4 | 2 |
| | 2 | 1 | 4 | 3 | 4 | 1 | 2 | 3 | 1 | 3 | 2 | 4 |
| SECOND CODE-WORD | 3 | 2 | 1 | 4 | 3 | 4 | 1 | 2 | 4 | 2 | 3 | 1 |
| | 4 | 3 | 2 | 1 | 2 | 3 | 4 | 1 | 2 | 4 | 1 | 3 |
| SYMBOL | 1 | 2 | 3 | 4 | 5 | 6 | 7 | 8 | 9 | 10 | 11 | 12 |

FIG.5

| | 1 | 2 | 3 | 4 | 5 | 6 | 7 | 8 | 9 | 10 | 11 | 12 |
|---|---|---|---|---|---|---|---|---|---|----|----|----|
| FIRST CODE-WORD | 1 | 4 | 3 | 2 | 1 | 2 | 3 | 2 | 3 | 4 | 1 | 2 |
| | 2 | 1 | 4 | 3 | 4 | 1 | 1 | 4 | 2 | 3 | 3 | 4 |
| SECOND CODE-WORD | 3 | 2 | 1 | 4 | 3 | 4 | 4 | 1 | 1 | 2 | 2 | 3 |
| | 4 | 3 | 2 | 1 | 2 | 3 | 2 | 3 | 4 | 1 | 4 | 1 |
| SYMBOL | 1 | 2 | 3 | 4 | 5 | 6 | 7 | 8 | 9 | 10 | 11 | 12 |

FIG.6

| | 1 | 2 | 3 | 4 | 5 | 6 | 7 | 8 | 9 | 10 | 11 | 12 |
|---|---|---|---|---|---|---|---|---|---|----|----|----|
| FIRST CODE-WORD | 1 | 3 | 4 | 2 | 2 | 3 | 1 | 3 | 4 | 2 | 2 | 3 |
| | 2 | 4 | 1 | 3 | 4 | 1 | 2 | 4 | 1 | 3 | 4 | 1 |
| SECOND CODE-WORD | 3 | 1 | 2 | 4 | 3 | 2 | 3 | 1 | 2 | 4 | 3 | 2 |
| | 4 | 2 | 3 | 1 | 1 | 4 | 4 | 2 | 3 | 1 | 1 | 4 |
| SYMBOL | 1 | 2 | 3 | 4 | 5 | 6 | 7 | 8 | 9 | 10 | 11 | 12 |

FIG.7

START

ST802 → DETERMINE ALL FORMABLE
LAYER PERMUTATIONS

ST804 → GENERATE ELEMENT
PATTERNS BY CIRCULATION

ST806 → SELECT K ELEMENT
PATTERNS

ST808 → GENERATE THE LAYER MAPPING PATTERN
BASED ON THE K ELEMENT PATTERNS

END

FIG. 8

20

201 LAYER
PERMUTATION
DETERMINATION
MODULE

202 ELEMENT PATTERN
GENERATION
MODULE

204 LAYER MAPPING
PATTERN GENERATION
MODULE

203 SELECTION
MODULE

FIG. 9

| | | | | | |
|---|---|---|---|---|---|
| 1 | 1 | 1 | 1 | 1 | 1 |
| 2 | 2 | 3 | 3 | 4 | 4 |
| 3 | 4 | 2 | 4 | 2 | 3 |
| 4 | 3 | 4 | 2 | 3 | 2 |
| L1 | L2 | L3 | L4 | L5 | L6 |

FIG.10

| 1 | 4 | 3 | 2 |
|---|---|---|---|
| 2 | 1 | 4 | 3 |
| 3 | 2 | 1 | 4 |
| 4 | 3 | 2 | 1 |

EP1

| 1 | 3 | 4 | 2 |
|---|---|---|---|
| 2 | 1 | 3 | 4 |
| 4 | 2 | 1 | 3 |
| 3 | 4 | 2 | 1 |

EP2

| 1 | 4 | 2 | 3 |
|---|---|---|---|
| 3 | 1 | 4 | 2 |
| 2 | 3 | 1 | 4 |
| 4 | 2 | 3 | 1 |

EP3

| 1 | 2 | 4 | 3 |
|---|---|---|---|
| 3 | 1 | 2 | 4 |
| 4 | 3 | 1 | 2 |
| 2 | 4 | 3 | 1 |

EP4

| 1 | 3 | 2 | 4 |
|---|---|---|---|
| 4 | 1 | 3 | 2 |
| 2 | 4 | 1 | 3 |
| 3 | 2 | 4 | 1 |

EP5

| 1 | 2 | 3 | 4 |
|---|---|---|---|
| 4 | 1 | 2 | 3 |
| 3 | 4 | 1 | 2 |
| 2 | 3 | 4 | 1 |

EP6

FIG. 11

| | | | | | | | | | | | | | | | | |
|---|---|---|---|---|---|---|---|---|---|---|---|---|---|---|---|---|
| FIRST CODE-WORD | 1 | 4 | 3 | 2 | 1 | 4 | 2 | 3 | 1 | 3 | 2 | 4 | 1 | 2 | 3 | 4 |
| | 2 | 1 | 4 | 3 | 3 | 1 | 4 | 2 | 4 | 1 | 3 | 2 | 4 | 1 | 2 | 3 |
| SECOND CODE-WORD | 3 | 2 | 1 | 4 | 2 | 3 | 1 | 4 | 2 | 4 | 1 | 3 | 3 | 4 | 1 | 2 |
| | 4 | 3 | 2 | 1 | 4 | 2 | 3 | 1 | 3 | 2 | 4 | 1 | 2 | 3 | 4 | 1 |
| SYMBOL | 1 | 2 | 3 | 4 | 5 | 6 | 7 | 8 | 9 | 10 | 11 | 12 | 13 | 14 | 15 | 16 |

## FIG.12

| | | | | | | | | |
|---|---|---|---|---|---|---|---|---|
| FIRST CODE-WORD | 1 | 4 | 3 | 2 | 1 | 3 | 4 | 2 |
| | 2 | 1 | 4 | 3 | 2 | 1 | 3 | 4 |
| SECOND CODE-WORD | 3 | 2 | 1 | 4 | 4 | 2 | 1 | 3 |
| | 4 | 3 | 2 | 1 | 3 | 4 | 2 | 1 |
| SYMBOL | 1 | 2 | 3 | 4 | 5 | 6 | 7 | 8 |

## FIG. 13

START

ST1402

DELETE ONE OF THE TWO LAYER
PERMUTATIONS WITH SAME MAPPING
OF A CODEWORD TO A LAYER

ST1404

COMBINE THE REMAINED LAYER
PERMUTATIONS AFTER THE DELETION

ST1406

INTERLEAVE THE LAYER
PERMUTATIONS

END

FIG.14

204

2041          2042

DELETION
UNIT

COMBINATION
UNIT

2043

INTERLEAVING
UNIT

FIG. 15

| FIRST CODE-WORD | 1 | 4 | 3 | 2 | 1 | 2 | 3 | 4 | 1 | 2 | 3 | 4 |
| | 2 | 1 | 4 | 3 | 3 | 4 | 1 | 2 | 4 | 1 | 2 | 3 |
| SECOND CODE-WORD | 3 | 2 | 1 | 4 | 2 | 1 | 4 | 3 | 3 | 4 | 1 | 2 |
| | 4 | 3 | 2 | 1 | 4 | 3 | 2 | 1 | 2 | 3 | 4 | 1 |
| SYMBOL | 1 | 2 | 3 | 4 | 5 | 6 | 7 | 8 | 9 | 10 | 11 | 12 |

## FIG. 16

| FIRST CODE-WORD | 1 | 4 | 3 | 2 | 3 | 2 |
| | 2 | 1 | 4 | 3 | 1 | 4 |
| SECOND CODE-WORD | 3 | 2 | 1 | 4 | 2 | 3 |
| | 4 | 3 | 2 | 1 | 4 | 1 |
| SYMBOL | 1 | 2 | 3 | 4 | 5 | 6 |

## FIG. 17

| FIRST CODE-WORD | 1 | 4 | 3 | 3 | 2 | 2 |
| | 2 | 1 | 1 | 4 | 3 | 4 |
| SECOND CODE-WORD | 3 | 2 | 2 | 1 | 4 | 3 |
| | 4 | 3 | 4 | 2 | 1 | 1 |
| SYMBOL | 1 | 2 | 3 | 4 | 5 | 6 |

## FIG. 18

| | 1 | 2 | 3 | 4 | 5 | 6 | 7 | 8 | 9 | 10 | 11 | 12 |
|---|---|---|---|---|---|---|---|---|---|---|---|---|
| FIRST CODE-WORD | 1 | 3 | 1 | 2 | 1 | 2 | 4 | 2 | 4 | 3 | 3 | 4 |
| | 2 | 4 | 3 | 4 | 4 | 3 | 3 | 1 | 2 | 1 | 2 | 1 |
| SECOND CODE-WORD | 3 | 1 | 2 | 1 | 2 | 1 | 2 | 4 | 3 | 4 | 4 | 3 |
| | 4 | 2 | 4 | 3 | 3 | 4 | 1 | 3 | 1 | 2 | 1 | 2 |

SYMBOL

FIG. 19

| | 1 | 2 | 3 | 4 | 5 | 6 |
|---|---|---|---|---|---|---|
| FIRST CODE-WORD | 1 | 3 | 1 | 2 | 1 | 2 |
| | 2 | 4 | 3 | 4 | 4 | 3 |
| SECOND CODE-WORD | 3 | 1 | 2 | 1 | 2 | 1 |
| | 4 | 2 | 4 | 3 | 3 | 4 |

SYMBOL

FIG. 20

# INTERNATIONAL SEARCH REPORT

International application No.

PCT/CN2009/075690

**A. CLASSIFICATION OF SUBJECT MATTER**

H04B7/04 (2006.01) i

According to International Patent Classification (IPC) or to both national classification and IPC

**B. FIELDS SEARCHED**

Minimum documentation searched (classification system followed by classification symbols)

IPC: H04B7/-, H04B1/-

Documentation searched other than minimum documentation to the extent that such documents are included in the fields searched

Electronic data base consulted during the international search (name of data base and, where practicable, search terms used)

CNKI;CPRS;WPI;EPODOC:codeword,layer,stream,symbol,map,all,total,pair,figure,pattern,generate,multiple,input,output, MIMO

**C. DOCUMENTS CONSIDERED TO BE RELEVANT**

| Category* | Citation of document, with indication, where appropriate, of the relevant passages | Relevant to claim No. |
|---|---|---|
| X A | TW200845626A (LG ELECTRONICS INC) 16 Nov. 2008 (16.11.2008) Description page 21 line 3, page 31 line 3 – page 33 line 6, fig. 5A The same as above | 1-6,13,14 7-12,15,16 |
| A | WO2008100213A2 (TELEFONAKTIEBOLAGET ERICSSON L M) 21 Aug. 2008 (21.08.2008) The whole document | 1-16 |
| A | CN101536358A (QUALCOMM INC) 16 Sep. 2009 (16.09.2009) The whole document | 1-16 |
| A | WO2009110759A2 (LG ELECTRONICS INC) 11 Sep. 2009 (11.09.2009) The whole document | 1-16 |

☐ Further documents are listed in the continuation of Box C.   ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 Sep. 2010 (04.09.2010) | **23 Sep. 2010 (23.09.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer YANG,Wei Telephone No. (86-10)62411315 |
|---|---|

Form PCT/ISA /210 (second sheet) (July 2009)

## INTERNATIONAL SEARCH REPORT
### Information on patent family members

| International application No. |
|---|
| PCT/CN2009/075690 |

| Patent Documents referred in the Report | Publication Date | Patent Family | Publication Date |
|---|---|---|---|
| TW200845626A | 16.11.2008 | WO2008082277A2 | 10.07.2008 |
| | | KR20080065493A | 14.07.2008 |
| | | KR20080111788A | 24.12.2008 |
| | | KR20090009071A | 22.01.2009 |
| | | EP2100385A2 | 16.09.2009 |
| | | INDELNP200903976E | 27.11.2009 |
| | | MXPA09007274A | 31.07.2009 |
| | | US2010054353A1 | 04.03.2010 |
| | | KR20080064432A | 09.07.2008 |
| WO2008100213A2 | 21.08.2008 | WO2008100213A3 | 20.11.2008 |
| | | WO2008100213A9 | 30.12.2009 |
| | | US2008192718A1 | 14.08.2008 |
| | | TW200847649A | 01.12.2008 |
| | | KR20090119857A | 20.11.2009 |
| | | CN101611586A | 23.12.2009 |
| | | INDELNP200904128E | 01.01.2010 |
| | | EP2145437A2 | 20.01.2010 |
| | | JP2010521078T | 17.06.2010 |
| CN101536358A | 16.09.2009 | WO2008058112A2 | 15.05.2008 |
| | | WO2008058112A3 | 11.12.2008 |
| | | TW200835200A | 16.08.2008 |
| | | EP2080288A2 | 22.07.2009 |
| | | KR20090080546A | 24.07.2009 |
| | | AU2007316403A1 | 15.05.2008 |
| | | CA2667161A1 | 15.05.2008 |
| | | MXPA09004838A | 31.05.2009 |
| | | EP2120367A2 | 18.11.2009 |
| | | NO20092159A | 03.06.2009 |
| | | US2010027697A1 | 04.02.2010 |
| | | JP2010509861T | 25.03.2010 |
| | | INCHENP200902248E | 19.03.2010 |
| WO2009110759A2 | 11.09.2009 | WO2009110759A3 | 29.10.2009 |
| | | KR20090095485A | 09.09.2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101536358 A